# EUROPÄISCHE PATENTSCHRIFT

(11) **EP 2 219 819 B1**
(45) Veröffentlichungstag und Bekanntmachung des Hinweises auf die Patenterteilung: **24.08.2011**
(21) Anmeldenummer: 08863786.3
(22) Anmeldetag: 11.12.2008
(51) Int. Cl.: B23P 15/00, B23K 20/12, F01D 5/34

(54) **VERFAHREN ZUM HERSTELLEN EINES INTEGRAL BESCHAUFELTEN ROTORS**
METHOD FOR THE PRODUCTION OF AN INTEGRALLY BLADED ROTOR
PROCÉDÉ DE FABRICATION D'UN ROTOR À AUBAGE INTÉGRAL

(30) Priorität: 22.12.2007 DE 102007062557
(43) Veröffentlichungstag der Anmeldung: 25.08.2010
(73) Patentinhaber: MTU Aero Engines GmbH, 80995 München (DE)
(72) Erfinder: BAYER, Erwin, 85221 Dachau (DE)
(86) Internationale Anmeldenummer: PCT/DE2008/002071
(87) Internationale Veröffentlichungsnummer: WO 2009/079987

(56) Entgegenhaltungen:
- EP-A- 0 905 352
- EP-A- 1 239 116
- EP-A- 1 526 252
- DE-C- 675 222
- US-A- 3 609 059
- US-A1- 2003 039 547

## Beschreibung

Die Erfindung betrifft ein Verfahren zum Herstellen eines integral beschaufelten Rotors, insbesondere Gasturbinerotors. Ein solches Verfahren ist aus der EP 0 905 352 A bekannt.

Gasturbinenrotoren mit integraler Beschaufelung bezeichnet man abhängig davon, ob ein im Querschnitt scheibenförmiger oder ein im Querschnitt ringförmiger Rotor bzw. Rotorträger (im folgenden Rotorgrundkörper genannt) vorhanden ist, als Blisk bzw. Bling. Blisk ist die Kurzform von bladed disk und Bling von bladed ring.

Aus dem Stand der Technik ist es bekannt, Gasturbinenrotoren mit integraler Beschaufelung durch Fräsen aus dem Vollen herzustellen, was natürlich sehr aufwendig und teuer ist, weshalb dieses Verfahren nur für relativ kleine Gasturbinenrotoren Verwendung gefunden hat.

Ein anderes, bei großen Rotoren Anwendung findendes Verfahren ist das Reibschweißen. Dabei werden Rotorgrundkörper und die Schaufeln separat hergestellt und anschließend miteinander reibverschweißt, insbesondere durch Linearreibschweißen. Ein Vorteil des Herstellens mittels Schweißen besteht darin, daß Rotorgrundkörper und Turbinenschaufeln aus unterschiedlichen Materialien hergestellt werden können, die den unterschiedlichen Anforderungen dieser Abschnitte des Rotors anpaßbar sind. Schwierig ist die Ausrichtung der Schaufeln zum Rotorgrundkörper im gefügten Zustand insbesondere beim Reibschweißen, bei dem eines der beiden Teile relativ zum anderen bewegt werden muß.

Aufgabe der Erfindung ist es, ein Verfahren zum Herstellen eines integral beschaufelten Rotors zu schaffen, bei dem ein einfacher Reibschweißprozeß mit hoher Reproduzierbarkeit und sehr geringem Fehlerrisiko anwendbar ist. Darüber hinaus sollen die zu fügenden Teile, insbesondere die Schaufeln, beim Fügen so gering wie möglich belastet werden. Ferner soll ein möglichst einfach herstellbarer Rotor angegeben werden.

Das erfindungsgemäße Verfahren sieht hierzu folgende Schritte vor:
a) Bereitstellen eines Schaufelkranzes mit Turbinenschaufeln,
b) Reibschweißen eines ersten Rotorgrundkörpers an den Schaufelkranz und
c) Reibschweißen eines zweiten Rotorgrundkörpers an den Schaufelkranz.

Beim erfindungsgemäßen Verfahren wird der Rotorträger aus zwei Teilen zusammengesetzt, nämlich dem ersten und dem zweiten Rotorgrundkörper. Das bedeutet, diese beiden Teile sind weniger groß und schwer als ein massiver Rotorträger und müssen einzeln weniger Drehmoment und Kraft übertragen. Das bedeutet auch, daß die beim Reibschweißen dieser leichteren und kleineren Teile aufzubringenden Kräfte geringer sind als beim Reibschweißen eines großen, einzelnen Rotorgrundkörpers. Beispielsweise können die Stauchkräfte beim Reibschweißen verringert werden. Darüber hinaus läßt sich auch das Gesamtgewicht des Rotors verringern, insbesondere wenn die beiden Rotorgrundkörper voneinander beabstandet sind, so daß sich eine Art Hohlraumstruktur ergibt. Beide Rotorgrundkörper bilden eine Verbindung zwischen dem Schaufelkranz und der Welle.

Bezüglich des Schaufelkranzes ist zu erwähnen, daß dieser ein geschlossen umlaufender Ring sein kann, was bevorzugt der Fall ist. Alternativ wäre es auch möglich, den Schaufelkranz aus einzelnen Segmenten zusammenzusetzen, die dann erst durch das Anschweißen der Rotorgrundkörper miteinander verbunden sind.

Gemäß der bevorzugten Ausführungsform hat der Schaufelkranz einen Steg angeformt, an dem der erste Rotorgrundkörper angeschweißt wird. Beispielsweise könnte dieser Steg radial innenseitig am Schaufelkranz vorgesehen sein.

Der Steg kann auf der dem ersten Rotorgrundkörper zugewandten Seite eine Schweißlippe besitzen, das heißt, einen Abschnitt mit verringertem Querschnitt, über den der erste Kontakt des anzuschweißenden Werkstücks erfolgt.

Der zweite Rotorgrundkörper sollte an der dem ersten Rotorgrundkörper entgegengesetzten Stirnseite des Stegs angeschweißt werden, so daß die Schweißnähte voneinander ausreichend beabstandet sind.

Eine prozeßtechnisch besonders vorteilhafte Ausführungsform sieht vor, daß der Schaufelkranz beim Reibschweißen an einem vom Schaufelkranz abstehenden Haltevorsprung gehalten wird. Insbesondere das Halten der Teile beim Reibschweißen ist besonders kritisch, da keine zu hohen Kräfte auf die labilen Abschnitte der Teile übertragen werden dürfen. Die Haltevorsprünge erlauben auch die Gestaltung einer optimalen Haltegeometrie.

In diesem Zusammenhang hat es sich als vorteilhaft herausgestellt, wenn der Haltevorsprung radial innenseitig am Schaufelkranz vorgesehen ist und axialseitig absteht.

Der Haltevorsprung kann auch ein Abschnitt oder Fortsatz des Stegs sein, so daß der Steg eine Doppelfunktion innehat.

Eine weitere Variante des Verfahrens nach der Erfindung sieht vor, daß der Haltevorsprung nach dem Anschweißen des ersten Rotorgrundkörpers mechanisch abgetragen wird, um eine Fügefläche für den zweiten Rotorgrundkörper herzustellen. Damit wird insgesamt das Bauvolumen reduziert, denn der erste und der zweite Rotorgrundkörper können näher aneinander angeordnet sein.

Beim Abtragen kann auch eine Schweißlippe mit verringertem axialen Querschnitt für den zweiten Rotorgrundkörper erzeugt werden. Da eine relativ genau hergestellte Schweißlippe für das Reibschweißverfahren vorteilhaft ist, läßt sich beim Abtragen zur Reduzierung des Bauvolumens gleichzeitig auch die optimale Fügefläche herstellen.

Da im Bereich des Schaufelkranzes sehr wenig Bauraum zur Verfügung steht, um den Rotorkranz zu halten und die Abschnitte des Rotorkranzes gerade nahe der Turbinenschaufeln sehr vorsichtig zu handhaben sind, läßt sich der zweite Reibschweißvorgang bevorzugt durchführen, wenn die Einheit aus Schaufelkranz und erstem Rotorgrundkörper am ersten Rotorgrundkörper gehalten wird.

Hierzu kann der erste Rotorgrundkörper einen Haltevorsprung zum Lagefixieren der Einheit besitzen, welcher nach dem Anschweißen des zweiten Rotorgrundkörpers mechanisch abgetragen wird. Auch hierdurch ist es möglich, mit einfachen Mitteln eine optimale Haltegeometrie bereitzustellen.

Wie bereits erwähnt, können erster und zweiter Rotorgrundkörper in angeschweißtem Zustand zumindest teilweise voneinander axial beabstandet sein, um zwischen sich einen Hohlraum zu bilden.

Dieser Hohlraum läßt sich auch als Teil eines Kühlkanals ausführen, so daß der Rotor insbesondere im Turbinenbereich einer Gasturbine vorteilhaft einsetzbar ist. Darüber hinaus ist die Erfindung natürlich auch vorteilhaft bei der Herstellung eines Rotors für den Verdichterbereich einer Gasturbine.

Der Ringabschnitt des Schaufelkranzes kann integral gegossen oder an die Schaufeln gefügt sein, so daß unterschiedliche Werkstoffe für Ringabschnitt und Turbinenschaufeln eingesetzt werden können.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:

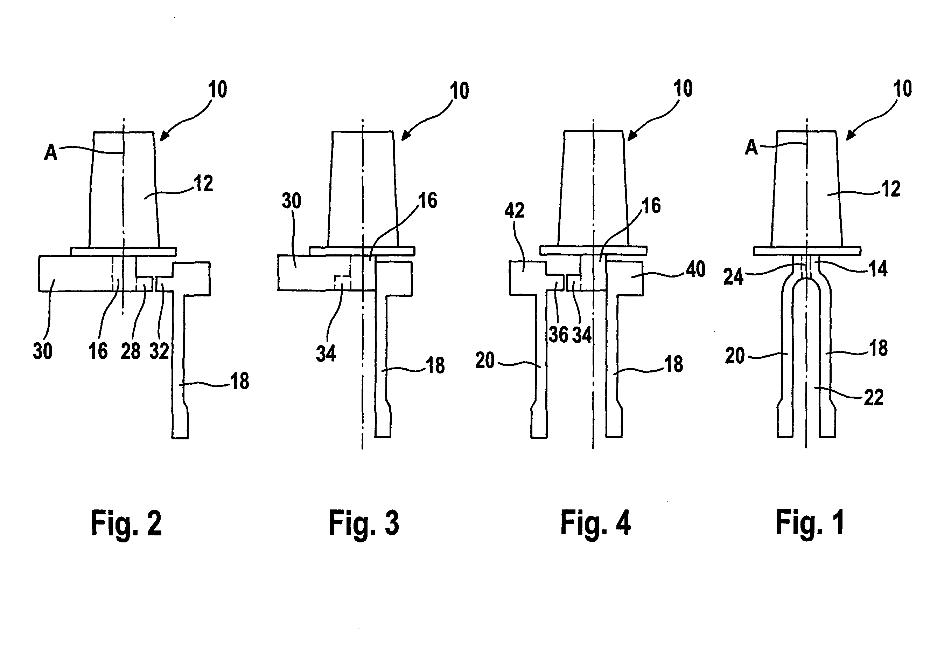

Figuren 1 bis 4 Halbschnitte des erfindungsgemäßen Rotors in verschiedenen Herstellungsschritten, mit denen das erfindungsgemäße Verfahren wiedergegeben wird.

In Figur 1 ist ein integral beschaufelter Rotor in Form eines Gasturbinenrotors im Halbschnitt dargestellt.

Der Rotor umfaßt mehrere Abschnitte, nämlich einen Schaufelkranz 10 mit Turbinenschaufeln 12 und einen die Turbinenschaufeln 12 verbindenden Ringabschnitt 14 sowie einen Rotorträger.

Der Rotorträger umfaßt einen ersten Rotorgrundkörper 18 sowie einen zweiten Rotorgrundkörper 20. Beide Rotorgrundkörper 18, 20 sind am Schaufelkranz 10 durch Reibschweißen befestigt.

Wie man Figur 1 entnehmen kann, sind die Rotorgrundkörper 18, 20 axial voneinander beabstandet, so daß sich zwischen ihnen ein Hohlraum 22 bildet, der Teil eines Kühlkanalsystems sein kann, das über weitere Kanäle 24 die Turbinenschaufeln 12 erreicht.

Die Herstellung des Rotors wird im folgenden erläutert. Der Schaufelkranz 10 wird dadurch hergestellt, daß die Turbinenschaufeln 12 am Ringabschnitt 14 durch Schweißen, Löten oder Gießen des Ringabschnitts angebracht werden. Der Ringabschnitt 14 besteht üblicherweise aus einem anderen Material als die Turbinenschaufeln 12.

Der Schaufelkranz 10, im folgenden Fall genauer gesagt der Ringabschnitt 14, hat mehrere Abschnitte, wie Figur 2 zu entnehmen ist. Ein ringförmiger Steg 16 liegt vorzugsweise genau ausgerichtet zur Mittelachse A der Turbinenschaufel 12 und steht radial nach innen vor. Vom Steg 16 wiederum steht auf einer Seite ein Fortsatz ab, der als Schweißlippe 28 dient. Im Bereich der Schweißlippe 28 weist der Ringabschnitt 14 einen geringeren radialen Querschnitt auf als am Rest des Steges 16.

Auf der der Schweißlippe 28 entgegengesetzten Seite des Stegs 16 weist dieser einen ringförmigen Haltevorsprung 30 auf, welcher wie der Steg 16 geschlossen ringförmig umläuft und sozusagen eine Fortsetzung des Steges 16 bildet. Dieser Haltevorsprung 30 dient als Spannring und wird in einer Reibschweißvorrichtung befestigt.

In einem ersten Verfahrensschritt wird der erste Rotorgrundkörper 18, der ebenfalls eine Schweißlippe 32 besitzt, an den Schaufelkranz 10 rotationsreibgeschweißt. In Figur 3 ist die nach dem Reibschweißen entstandene Einheit zu erkennen.

Anschließend wird der Haltevorsprung 30 mechanisch abgetragen, insbesondere abgedreht, bis auf eine im Querschnitt kleinere Schweißlippe 34, die in Figur 3 mit unterbrochenen Linien dargestellt ist.

Im nächsten Verfahrensschritt, welcher in Figur 4 zu erkennen ist, wird der zweite Rotorgrundkörper 20, der wie der erste Rotorgrundkörper 18 mit einer Schweißlippe 36 ausgestattet ist, ebenfalls an den Steg 16 angeschweißt.

Vorzugsweise sind die beiden Rotorgrundkörper 18, 20 gleich oder spiegelbildlich ausgeführt.

Die Einheit aus erstem Rotorgrundkörper 18 und Schaufelkranz 10 wird während des zweiten Rotationsreibschweißvorgangs an einem Haltevorsprung 40 fixiert. Der Haltevorsprung 40 ist ein rückseitiger, spannringartiger Fortsatz am ersten Rotorgrundkörper 18. Der zweite Rotorgrundkörper 20 hat gegebenenfalls ebenfalls einen Haltevorsprung 42, der als Einspannstelle für die Drehmomentaufbringung dienen kann.

Nach dem Anschweißen des zweiten Rotorgrundkörpers 20 an den Steg 16 hat der Rotor fast seine abschließende Gestalt, nur die beiden Haltevorsprünge 40, 42 werden noch mechanisch abgetragen, insbesondere abgedreht, so daß schließlich die in Figur 1 dargestellte Form entsteht.

Die Rotorgrundkörper 18, 20 können aus gleichen oder unterschiedlichen Materialien bestehen und auch aus gleichen oder unterschiedlichen Materialien verglichen mit denen des Schaufelkranzes 10.

Die Kühlkanäle 24 können nach dem Anschweißen der Rotorgrundkörper 18, 20 oder auch zuvor erzeugt werden.

Wie Figur 1 zu entnehmen ist, haben die scheiben- oder ringartigen Rotorgrundkörper 18, 20 in Axialrichtung gleichen Abstand zur Mittelachse A.

Alternativ wäre es natürlich auch möglich, mehr als zwei Rotorgrundkörper vorzusehen.

## Patentansprüche

1. Verfahren zum Herstellen eines integral beschaufelten Rotors, insbesondere Gasturbinenrotors, **gekennzeichnet durch** folgende Schritte:
a) Bereitstellen eines Schaufelkranzes (10) mit Turbinenschaufeln (12),
b) Reibschweißen eines ersten Rotorgrundkörpers (18) an den Schaufelkranz (10) und
c) Reibschweißen eines zweiten Rotorgrundkörpers (20) an den Schaufelkranz (10).

2. Verfahren nach Anspruch 1, **dadurch gekennzeichnet, daß** der Schaufelkranz (10) einen Steg (16) angeformt hat, an dem der erste Rotorgrundkörper (18) angeschweißt wird.

3. Verfahren nach Anspruch 2, **dadurch gekennzeichnet, daß** der Steg (16) auf der dem ersten Rotorgrundkörper (18) zugewandten Seite eine Schweißlippe (28) in Form eines Abschnitts mit verringertem radialen Querschnitt besitzt.

4. Verfahren nach Anspruch 2 oder 3, **dadurch gekennzeichnet, daß** der zweite Rotorgrundkörper (20) an der dem ersten Rotorgrundkörper (18) entgegengesetzten Stirnseite des Stegs (16) angeschweißt wird.

5. Verfahren nach einem der vorhergehenden Ansprüche, **dadurch gekennzeichnet, daß** der Schaufelkranz (10) an einem vom Schaufelkranz (10) abstehenden Haltevorsprung (30) beim Reibschweißen gehalten wird.

6. Verfahren nach Anspruch 5, **dadurch gekennzeichnet, daß** der Haltevorsprung (30) radial innenseitig am Schaufelkranz (10) vorgesehen ist und axial seitlich absteht.

7. Verfahren nach einem der Ansprüche 5 oder 6, **dadurch gekennzeichnet, daß** der Haltevorsprung (30) eine Verlängerung des Stegs (16) ist.

8. Verfahren nach einem der Ansprüche 5 bis 7, **dadurch gekennzeichnet, daß** der Haltevorsprung (30) nach dem Anschweißen des ersten Rotorgrundkörpers (18) mechanisch abgetragen wird, um eine Fügefläche für den zweiten Rotorgrundkörper (20) herzustellen.

9. Verfahren nach Anspruch 8, **dadurch gekennzeichnet, daß** am Haltevorsprung (30) eine Schweißlippe (34) mit verringertem radialen Querschnitt für den zweiten Rotorgrundkörper (20) hergestellt wird.

10. Verfahren nach einem der vorhergehenden Ansprüche, **dadurch gekennzeichnet, daß** die nach dem Anschweißen des ersten Rotorgrundkörpers (18) entstandene Einheit am ersten Rotorgrundkörper (18) gehalten wird, wenn der zweite Rotorgrundkörper an diese Einheit durch Reibschweißen befestigt wird.

11. Verfahren nach Anspruch 10, **dadurch gekennzeichnet, daß** der erste Rotorgrundkörper (18) einen Haltevorsprung (40) zum Lagefixieren der Einheit hat, der nach dem Anschweißen des zweiten Rotorgrundkörpers mechanisch abgetragen wird.

12. Verfahren nach einem der vorhergehenden Ansprüche, **dadurch gekennzeichnet, daß** erster und zweiter Rotorgrundkörper (18, 20) in angeschweißtem Zustand zumindest teilweise voneinander axial beabstandet sind und zwischen sich einen Hohlraum (22) bilden.

13. Verfahren nach Anspruch 12, **dadurch gekennzeichnet, daß** der Hohlraum (22) Teil eines Kühlkanals ist.

14. Verfahren nach einem der vorhergehenden Ansprüche, **dadurch gekennzeichnet, daß** der Schaufelkranz (10) einen Ringabschnitt (14) hat, der integral gegossen oder an die Turbinenschaufeln (12) gefügt wird.

## Claims

1. Method for producing an integrally bladed rotor, in particular a gas turbine rotor, **characterised by** the following steps:
a) provision of a blade ring (10) with turbine blades (12),
b) friction-welding of a first rotor base body (18) onto the blade ring (10), and
c) friction-welding of a second rotor base body (20) onto the blade ring (10).

2. Method according to claim 1, **characterised in that** the blade ring (10) has preformed thereon a web (16) on which the first rotor base body (18) is welded.

3. Method according to claim 2, **characterised in that** the web (16) has on the side facing the first rotor base body (18) a welding lip (28) in the form of a section with a reduced radial cross-section.

4. Method according to claim 2 or 3, **characterised in that** the second rotor base body (20) is welded on the face of the web (16) opposite the first rotor base body (18).

5. Method according to one of the preceding claims, **characterised in that** during the friction-welding the blade ring (10) is held on a holding projection (30) protruding from the blade ring (10).

6. Method according to claim 5, **characterised in that** the holding projection (30) is provided radially on the inside on the blade ring (10) and protrudes axially to the side.

7. Method according to one of claims 5 or 6, **characterised in that** the holding projection (30) is an extension of the web (16).

8. Method according to one of claims 5 to 7, **characterised in that** the holding projection (30) is mechanically removed after the first rotor base body (18) has been welded on in order to produce a joint face for the second rotor base body (20).

9. Method according to claim 8, **characterised in that** a welding lip (34) with a reduced radial cross-section is produced on the holding projection (30) for the second rotor base body (20).

10. Method according to one of the preceding claims, **characterised in that** the unit formed after the first rotor base body (18) has been welded on is held by the first rotor base body (18) when the second rotor base body is secured to this unit by friction welding.

11. Method according to claim 10, **characterised in that** the first rotor base body (18) has a holding projection (40), for fixing the position of the unit, that is mechanically removed after the second rotor base body has been welded on.

12. Method according to one of the preceding claims, **characterised in that** in the welded-on state the first and the second rotor base body (18, 20) are spaced apart from each other axially at least in part and form a hollow space (22) between them.

13. Method according to claim 12, **characterised in that** the hollow space (22) is part of a cooling channel.

14. Method according to one of the preceding claims, **characterised in that** the blade ring (10) has a ring section (14) that is integrally cast or is joined to the turbine blades (12).

## Revendications

1. Procédé de fabrication d'un rotor à aubage intégral, en particulier d'un rotor de turbine à gaz, **caractérisé par** les étapes suivantes :
a) mise à disposition d'une couronne (10) d'aubes de turbine (12),
b) soudage par friction d'un premier corps de base de rotor (18) sur la couronne d'aubes (10) et
c) soudage par friction d'un second corps de base de rotor (20) sur la couronne d'aubes (10).

2. Procédé selon la revendication 1, **caractérisé en ce que** la couronne d'aubes (10) a formé une nervure (16), sur laquelle est soudé le premier corps de base de rotor (18).

3. Procédé selon la revendication 2, **caractérisé en ce que** la nervure (16) possède, sur le côté tourné vers le premier corps de base de rotor (18), une lèvre de soudage (28) sous la forme d'une partie à section radiale réduite.

4. Procédé selon la revendication 2 ou 3, **caractérisé en ce que** le second corps de base de rotor (20) est soudé sur le côté avant de la nervure (16) opposé au premier corps de base de rotor (18).

5. Procédé selon l'une quelconque des revendications précédentes, **caractérisé en ce que** la couronne d'aubes (10) est maintenue sur une saillie de retenue (30) dépassant de la couronne d'aubes (10) lors du soudage par friction.

6. Procédé selon la revendication 5, **caractérisé en ce que** la saillie de retenue (30) est prévue côté intérieur dans le sens radial sur la couronne d'aubes (10) et dépasse latéralement dans le sens axial.

7. Procédé selon l'une quelconque des revendications 5 ou 6, **caractérisé en ce que** la saillie de retenue (30) est un prolongement de la nervure (16).

8. Procédé selon l'une quelconque des revendications 5 à 7, **caractérisé en ce que** la saillie de retenue (30) est enlevée mécaniquement après le soudage du premier corps de base de rotor (18) afin de fabriquer une surface de jonction pour le second corps de base de rotor (20).

9. Procédé selon la revendication 8, **caractérisé en ce qu'**une lèvre de soudage (34) à section radiale réduite pour le second corps de base de rotor (20) est fabriquée sur la saillie de retenue (30).

10. Procédé selon l'une quelconque des revendications précédentes, **caractérisé en ce que** l'unité produite après le soudage du premier corps de base de rotor (18) est maintenue sur le premier corps de base de rotor (18) si le second corps de base de rotor est fixé sur cette unité par soudage par friction.

11. Procédé selon la revendication 10, **caractérisé en ce que** le premier corps de base de rotor (18) présente une saillie de retenue (40) destinée à fixer la position de l'unité, laquelle saillie est enlevée mécaniquement après le soudage du second corps de base de rotor.

12. Procédé selon l'une quelconque des revendications précédentes, **caractérisé en ce que** le premier et le second corps de base de rotor (18, 20) sont espacés au moins en partie dans le sens axial l'un de l'autre à l'état soudé et forment entre eux une cavité (22).

13. Procédé selon la revendication 12, **caractérisé en ce que** la cavité (22) fait partie d'un canal de refroidissement.

14. Procédé selon l'une quelconque des revendications précédentes, **caractérisé en ce que** la couronne d'aubes (10) présente une section annulaire (14) intégralement coulée ou jointe aux aubes de la turbine (12).
